# EUROPÄISCHE PATENTSCHRIFT

(11) **EP 1 748 246 B1**
(45) Veröffentlichungstag und Bekanntmachung des Hinweises auf die Patenterteilung: **18.01.2012**
(21) Anmeldenummer: 06010787.7
(22) Anmeldetag: 26.05.2006
(51) Int. Cl.: F16P 3/14

(54) **Schutzeinrichtung für Maschinen, wie Abkantpressen, Schneidemaschinen, Stanzmaschinen oder dergleichen**
Protective device for machines such as bending presses, cutting machines, punching machines or the like
Dispositif de protection pour machines telles que presses-plieuses, découpeuses, machines à estamper ou analogues

(30) Priorität: 30.07.2005 DE 102005035889
(43) Veröffentlichungstag der Anmeldung: 31.01.2007
(73) Patentinhaber: Fiessler Elektronik GmbH & Co. KG, 73734 Esslingen (DE)
(72) Erfinder: Fiessler, Lutz, Dr., 73773 Aichwald (DE); Fiessler, Götz, 73732 Esslingen (DE)
(74) Vertreter: Kocher, Mark Werner

(56) Entgegenhaltungen:
- EP-A- 0 789 182
- DE-A1- 10 123 562
- JP-A- 2003 275 820
- US-A- 3 603 688
- US-A- 5 526 725
- US-B1- 6 856 862

## Beschreibung

Die Erfindung betrifft ein Verfahren zum Betreiben einer Maschine wie einer Abkantpresse, einer Schneidemaschine, einer Stanzmaschine oder dergleichen.

Bei einer aus der DE 101 23 562 A1 bekannten Schutzeinrichtung muss ein Sicherheitsabstand der Lichtschrankenanordnung zu einem ersten Werkzeug, beispielsweise einem Oberwerkzeug, eingestellt werden. Verschiedene auswechselbare Werkzeuge haben jedoch verschiedene Dimensionen, so dass dieser Sicherheitsabstand jeweils neu eingestellt werden muss. Bei der bekannten Schutzeinrichtung erfolgt dies dadurch, dass die Lichtschranke zunächst gegen das erste Werkzeug solange bewegt wird, bis die Lichtschrankenanordnung oder wenigstens ein Lichtstrahl derselben unterbrochen wird. Danach erfolgt eine Bewegung in der entgegengesetzten Richtung, wobei die den Sicherheitsabstand vorgebende Wegstrecke der zweiten Bewegung durch eine elektrische Mess- und/oder Steuereinrichtung vorgebbar ist. Diese beiden Bewegungen erfordern jedoch zum einen umfangreiche technische Maßnahmen und zum anderen einen nicht unerheblichen Zeitaufwand.

Eine Aufgabe der Erfindung besteht darin, ein Verfahren zum Betreiben einer Maschine zu schaffen, bei der die Einstellung des Sicherheitsabstands schneller und einfacher erfolgen kann.

Diese Aufgabe wird erfindungsgemäß mit den Merkmalen des Anspruchs 1 gelöst.

Vorteile des erfindungsgemäßen Verfahrens bestehen insbesondere darin, dass nur noch eine einzige Bewegung in eine Richtung durchgeführt werden muss. Die Eingabe der Werkzeugdaten und gegebenenfalls der Werkstückdaten kann schnell und einfach erfolgen, ebenso wie die daraus rechnerisch ermittelte Abstandsposition.

Zunächst erfolgt eine motorische Verschiebung des ersten Maschinenteils in Schließrichtung bis zur Lichtschrankenunterbrechung durch das zweite Werkzeug oder das Werkstück. Elektronische Vergleichsmittel in der elektronischen Steuereinrichtung ermitteln die Abweichung zwischen der erreichten Position und der berechneten Abstandsposition. Danach erfolgt lediglich noch eine Positionskorrektur der Lichtschrankenanordnung um diese Abweichung und dadurch Einstellung der Justierposition. Das erfindungsgemäße Verfahren ist ohne zusätzliche Hardware realisierbar und kann in einfacher Weise durch entsprechende Programmierung der elektronischen Steuereinrichtung realisiert werden.

Durch die in den Unteransprüchen aufgeführten Maßnahmen sind vorteilhafte Weiterbildungen und Verbesserungen des im Anspruch 1 angegebenen Verfahrens möglich.

Bevorzugt können wird die Positionskorrektur mit Justiermitteln durchgeführt, die als motorische, manuelle oder optische Verstelleinrichtung ausgebildet sind.

Zur Erkennung des Erreichens der Justierposition sind zweckmäßigerweise Indikatormittel vorgesehen, die vorzugsweise als optische und/oder akustische Indikatormittel ausgebildet sind. Zusätzlich findet eine Fixierung der Lichtschrankenanordnung in der erreichten Justierposition durch Brems- und Haltemittel statt, was auch bei motorischer Verstellung von Vorteil sein kann, sofern kein selbstarretierender Antrieb vorgesehen ist.

In vorteilhafter Weise findet die Fixierung der Lichtschrankenanordnung in der Fixierposition mit Hilfe einer elektromagnetisch oder elektrisch oder mechanisch oder pneumatisch oder hydraulisch wirkenden Fixiereinrichtung statt.

Die Positionsmesseinrichtung ist in vorteilhafter Weise zur Erfassung der Relativposition zwischen dem ersten Maschinenteil und der Lichtschrankenanordnung ausgebildet.

In vorteilhafter Weise wird die optische Justierung unter Verwendung von Abschaltmitteln vorgenommen, die zur Abschaltung von Lichtschrankenbereichen vorgesehen sind, die außerhalb des Sicherheitsbereichs oder -abstands liegen. Solche Lichtschrankenbereiche können einzelne Lichtschranken oder einzelne Lichtempfängerbereiche der Lichtschrankenanordnung sein.

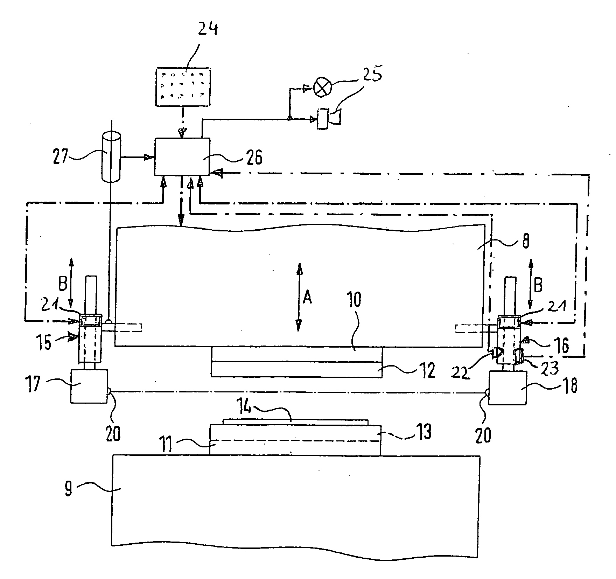

Ein Ausführungsbeispiel der Erfindung ist in der Zeichnung dargestellt und in der nachfolgenden Beschreibung näher erläutert. Die einzige Figur zeigt eine Längsseitenansicht einer mit einer Lichtschrankenanordnung versehenen Abkantpresse.

Die in der einzigen Figur dargestellte Abkantpresse besteht im Wesentlichen aus einem mit einem Oberwerkzeug 10 versehenen oberen Maschinenteil 8, das gegen ein feststehendes, mit einem Unterwerkzeug 11 versehenes unteres Maschinenteil 9 bewegbar ist.

Die gegensinnige Arbeitsbewegungsrichtung A ist mit einem Doppelpfeil gekennzeichnet. Selbstverständlich kann in einer alternativen Ausführung auch das Oberwerkzeug 10 feststehend und das Unterwerkzeug 11 bewegbar ausgebildet sein. Das langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 in der Arbeitsbewegung eingreift und dadurch das auf dem Unterwerkzeug 11 liegende zu bearbeitende Blech 14 biegt bzw. abkantet.

Die übrigen Bereiche der an sich bekannten Abkantpresse sind zur Vereinfachung nicht dargestellt. Oberwerkzeug 10 und Unterwerkzeug 11 können selbstverständlich unterschiedliche Längen und unterschiedliche Querschnittsgestalt aufweisen und sind jeweils auswechselbar am oberen Maschinenteil 8 bzw. unteren Maschinenteil 9 befestigt.

Als Halteeinrichtung sind jeweils an den einander entgegengesetzten Schmalseiten des oberen Maschinenteils 8 Führungen 15, 16 befestigt, beispielsweise angeschraubt. In diesen Führungen 15, 16 sind Halterungen 17, 18 für eine Lichtschrankenanordnung 20 in einer vertikalen Einstellbewegung bewegbar, deren Richtung durch Doppelpfeile B dargestellt ist und die der Arbeitsbewegungsrichtung A entspricht. Zur motorischen Bewegung der Halterungen 17, 18 sind diese mit motorischen Antrieben 21 versehen, die beispielsweise als Elektromotoren, Linearmotoren, Antriebszylinder oder dergleichen ausgebildet sein können. Sie können prinzipiell auch an den Führungen 15, 16 angeordnet sein. Die Lichtschrankenanordnung 20 besteht in an sich bekannter Weise aus wenigstens einem Licht-Sender, beispielsweise Laser-Sender und wenigstens einem entsprechenden Licht-Empfänger, wobei der wenigstens eine Laser-Sender an der einen Halterung 17 und der wenigstens eine Laser-Empfänger an der anderen Halterung 18 angeordnet sind. Es ist prinzipiell auch möglich, die Zahl der Sender durch einen Strahlteiler in mehrere Sendelichtstrahlen aufzuteilen oder aufzuweiten, so dass sich ein breiter Lichtstrahl ergibt. Weiterhin können auch parallele Lichtschranken durch parallele Laserstrahlen gebildet werden, die durch Umlenkung mittels einer Reflektionseinrichtung erzeugt werden. Bei einer solchen Ausführung sind dann beispielsweise der Sender und der Empfänger an der einen Halterung 17 und die Reflektionseinrichtung an der anderen Halterung 18 angeordnet. Anstelle einer Vielzahl einzelner Lichtschranken kann die Lichtschrankenanordnung 20 auch einen breiten und/oder aufgefächerten Sender-Lichtstrahl besitzen dem eine Empfängerfläche, z.B. eine Kamera gegenüber steht. Die einzelnen Kamerapixel oder Pixelbereiche können dabei die Funktion einzelner Lichtschranken ausüben. Dabei können auch bei dieser Ausgestaltung Sender und Empfänger auf derselben Seite und ein Reflektor auf der gegenüber liegenden Seite angeordnet sein.

Die Schutzwirkung der beschriebenen Schutzeinrichtung besteht darin, dass die Schließbewegung des Oberwerkzeugs 10 zum Unterwerkzeug 11 hin abrupt gestoppt wird, wenn einer der Lichtstrahlen der Lichtschrankenanordnung 20 unterbrochen wird, wobei dieser Lichtstrahl auswählbar ist. Diese Unterbrechung wird beispielsweise durch ein menschliches Körperteil der Bedienungsperson oder ein sonstiges Hindernis in der Bewegungsbahn des Oberwerkzeugs ausgelöst. Da derartige Abkantpressen oder ähnliche Maschinen häufig handbedient sind, besteht vor allem die Gefahr, dass die Hand oder der Arm der Bedienungsperson in die Arbeitsbewegungsbahn gelangt und eingeklemmt oder abgetrennt werden kann. Der Sicherheitsabstand zwischen dem betreffenden Laserstrahl der Lichtschrankenanordnung 20 hinsichtlich des Oberwerkzeugs 10 sollte daher so bemessen sein, dass zum einen beispielsweise kein Finger dazwischen geschoben werden kann, andererseits sollte dieser Sicherheitsabstand so groß sein, dass bei einer Lichtschrankenunterbrechung die Schließbewegung noch rechtzeitig vor dem Hindernis abgebremst bzw. gestoppt werden kann. Der Sicherheitsabstand wird daher beispielsweise zwischen 3 und 10 mm eingestellt.

Derartige Lichtschrankenanordnungen sind beispielsweise neben dem eingangs genannten Stand der Technik aus der DE 102 32 795 A1, der DE 102 46 609 A1 oder der DE 103 42 431 A1 bekannt. Weitere Details und Ausführungsvarianten von Lichtschranken und Lichtschrankenanordnungen können diesem Stand der Technik entnommen werden.

Eine elektronische Steuereinrichtung 26 dient zur Steuerung der Bewegung des oberen Maschinenteils 8 sowie zur Steuerung der motorischen Antriebe 21 in den Führungen 15, 16 und damit der Lichtschrankenanordnung 20 in der Einstellbewegungsrichtung B. Eine Positionsmesseinrichtung 22 dient zur Erfassung der Position der Lichtschrankenanordnung 20 relativ zum oberen Maschinenteil 8 bzw. zum daran angeordneten Oberwerkzeug 10. Weiterhin ist noch eine Messeinrichtung 27 zur Erfassung der Bewegung und/oder Position des oberen Maschinenteils 8 und damit des Oberwerkzeugs 10 vorgesehen, die zur Steuerung der Bewegung des Oberwerkzeugs 10 ohnehin immer vorhanden sein muss.

Eine Brems- und Halteeinrichtung 23 ist ebenfalls in einer der Führungen 15, 16 oder in beiden Führungen angeordnet, die als elektromagnetisch, elektrisch, mechanisch, pneumatisch oder hydraulisch wirkende Fixiereinrichtung ausgebildet ist. Sie kann auch an einer anderen Stelle angeordnet sein, wobei lediglich sichergestellt sein muss, dass sie zur Abbremsung der Verstellbewegung der Lichtschrankenanordnung 20 oder zum Festhalten derselben in der Sollposition geeignet ist.

Eine Eingabeeinrichtung 24, die beispielsweise als Tastatur oder drahtgebundene oder drahtlose elektronische Eingabeeinrichtung ausgebildet ist, ist mit der elektronischen Steuereinrichtung 26 verbunden oder steht in Verbindung mit derselben. Weiterhin sind Indikatormittel 25 mit der elektronischen Steuereinrichtung 26 verbunden, die zur optischen Signalgebung beim Ausführungsbeispiel als Signallampe und zur akustischen Signalgebung als Signalgeber ausgebildet sind. Beides ist alternativ oder gemeinsam möglich.

Da verschiedene Oberwerkzeuge 10 unterschiedlich dimensioniert sein können, muss der Sicherheitsabstand jeweils beim Auswechseln eines Oberwerkzeugs 10 neu eingestellt bzw. justiert werden. Hierzu werden diesem jeweiligen Werkzeug zugeordnete spezifische Werkzeugdaten sowie Werkzeugdaten des Unterwerkzeugs 11 und Werkstückdaten des zu bearbeitenden Werkstücks 14 über die Eingabeeinrichtung 25 in die Steuereinrichtung 26 eingegeben. Bei diesen Werkzeugdaten kann es sich um Abmessungen oder Codenummern handeln, aus denen in der elektronischen Steuereinrichtung 26 eine Abstandsposition des oberen Maschinenteils 8 tabellarisch oder rechnerisch ermittelt wird, in der das Oberwerkzeug 10 den vorgegebenen bzw. gewünschten Sicherheitsabstand zum Unterwerkzeug 11 oder, falls vorhanden und eingelegt, zum Werkstück 14 einnimmt. Erfolgt die Einstellung des Sicherheitsabstands bzw. der Abstandsposition ohne eingelegtes oder aufgelegtes Werkstück, so erübrigt sich selbstverständlich die Eingabe von Werkstückdaten. Auch für den Fall, dass nur das Oberwerkzeug 10, nicht dagegen das Unterwerkzeug 11 ausgewechselt wird, müssen keine neuen Daten für das Unterwerkzeug eingegeben werden, und die Abstandsposition kann lediglich aus den Werkzeugdaten des Oberwerkzeugs 10 ermittelt werden.

In einer ersten Betriebsvariante, die nicht Teil der Erfindung ist, wird nun mit Hilfe einer Positionsregeleinrichtung, die beispielsweise in der elektronischen Steuereinrichtung 26 enthalten sein kann, das obere Maschinenteil 8 und damit das Oberwerkzeug 10 in Schließrichtung motorisch in die errechnete Abstandsposition bewegt, in der das Oberwerkzeug 10 um den gewählten Sicherheitsabstand vom Unterwerkzeug 11 oder - bei aufgelegtem Werkstück 14 - vom Werkstück 14 beabstandet ist. Diese Positionsregelung arbeitet dabei mit der Messeinrichtung 27 zusammen. Nun wird eine Justiersteuerung in der elektronischen Steuereinrichtung 26 automatisch aktiviert, durch die die Lichtschrankenanordnung 20 mit Hilfe der motorischen Antriebe 21 in Richtung der dem ersten Werkzeug 10 zugewandten Endfläche oder -Kante des zweiten Werkzeugs 11 oder - bei aufgelegtem Werkstück 14 - dieses Werkstücks 14 bewegt wird. War der noch für das vorherige Oberwerkzeug 10 eingestellte Sicherheitsabstand für das neue Oberwerkzeug 10 zu klein, so erfolgt diese Justierbewegung in Schließrichtung bis eine Lichtschrankenunterbrechung erfolgt, oder war der Sicherheitsabstand zu groß, so erfolgt eine Bewegung in Gegenrichtung, bis die Lichtschrankenunterbrechung beendet ist. In beiden Fällen wird somit die Lichtschrankenanordnung 20 auf den Sicherheitsabstand eingestellt, der durch die aktuelle Abstandsposition des Oberwerkzeugs 10 zum Unterwerkzeug 11 bzw. Werkstück 14 hin vorgegeben ist, wobei diese Abstandsposition dann der Justierposition entspricht. Für diese Variante der Einstellung des Sicherheitsabstands wird somit die Positionsmesseinrichtung 22 nicht benötigt.

Bei Erreichen der Justierposition durch die Lichtschrankenanordnung 20, die dem exakten Sicherheitsabstand bezüglich des neuen Oberwerkzeugs 10 entspricht, wird die Brems- und/oder Halteeinrichtung 23 betätigt, so dass die Lichtschrankenanordnung 20 in dieser erreichten Justierposition fixiert wird. Diese Fixierung kann beispielsweise durch Klemmen oder Verrasten erfolgen. Sofern es sich bei den motorischen Antrieben 21 um selbst arretierende Antriebe handelt, beispielsweise um Spindelantriebe, so kann eine separate Brems- und/oder Halteeinrichtung 23 auch entfallen, da eine solche wirkungsmäßig in den motorischen Antrieben 21 dann integriert ist.

In einer zweiten, erfindungsgemäßen Betriebsvariante, die praktisch eine Umkehrung der ersten Betriebsvariante darstellt, wird zunächst durch Aktivierung der Positionsregeleinrichtung das erste Maschinenteil 8 so lange in Schließrichtung bewegt, bis eine Lichtschrankenunterbrechung durch das zweite Werkzeug 11 oder das Werkstück 14 erfolgt. Dann wird in der elektronischen Steuereinrichtung 26 der erreichte Positionswert mit der zuvor aus den eingegebenen Daten berechneten Abstandsposition verglichen und ein Differenzwert gebildet. Um diesen negativen oder positiven Differenzwert wird nun die Lichtschrankenanordnung 20 mit Hilfe der motorischen Antriebe 21 verstellt bzw. in die Justierposition justiert, die dann dem Sicherheitsabstand zum Oberwerkzeug 10 hin entspricht. Für diese Justierung ist die Positionsmesseinrichtung 22 im Gegensatz zur ersten Betriebsvariante erforderlich. Die Bremsung und/oder Fixierung der Lichtschrankenanordnung 20 erfolgt gemäß der ersten Betriebsvariante.

Alternativ zum motorischen Anfahren der Justierposition kann diese auch manuell eingestellt werden. Anstelle der motorischen Antriebe 21 treten dann manuelle Einstellmittel, beispielsweise Einstellkurbeln, Einstellknöpfe, Einstellringe oder dergleichen. Die Eingabe der Werkzeugdaten bzw. Werkstückdaten erfolgt in gleicher Weise. Anschließend wird dann die Lichtschrankenanordnung 20 manuell solange bewegt, bis entweder die Indikatormittel 25 das Erreichen der Justierposition anzeigen oder bis die Brems- und/oder Halteeinrichtung 23 die manuelle Bewegung automatisch stoppt und die Lichtschrankenanordnung 20 in der Justierposition fixiert. Selbstverständlich kann auch beides vorgesehen sein. Hierbei ist anzumerken, dass die Indikatormittel 25 auch bei einer motorischen Verstellung vorgesehen sein können, wobei jeweils akustische und/oder optische Signale ausgelöst werden können.

Damit während des eigentlichen Arbeitsvorgangs - nicht beim Justiervorgang - bei Erreichen des Werkstücks 14 durch die Lichtschrankenanordnung 20 bzw. deren Lichtstrahl oder deren Lichtstrahlen die Arbeitsbewegung nicht gestoppt wird, was selbstverständlich unerwünscht ist, sind in an sich bekannter Weise Maßnahmen vorgesehen, die dies verhindern, beispielsweise elektronische oder mechanische Mittel, wie sie im angegebenen Stand der Technik beschrieben sind.

Alternativ wird die Justierposition nicht durch motorische oder manuelle Bewegung der Lichtschrankenanordnung 20 eingestellt, sondern optisch justiert. Dies kann beispielsweise dadurch erfolgen, dass alle Lichtschranken der Lichtschrankenanordnung 20 durch die elektronische Steuereinrichtung 26 deaktiviert oder abgeschaltet werden, die außerhalb der Justierposition und damit des Sicherheitsabstands bzw. -bereichs liegen. Entsprechend werden bei einer Ausgestaltung der Lichtschrankenanordnung 20 mit breitem Lichtstrahl und Empfängerkamera diejenigen Kamerapixel oder -pixelbereiche deaktiviert, die außerhalb der Justierposition bzw. des Sicherheitsabstands bzw. -bereichs liegen.

## Patentansprüche

1. Verfahren zum Betreiben einer Maschine wie einer Abkantpresse, einer Schneidemaschine, einer Stanzmaschine oder dergleichen, bei dem ein ein erstes Werkzeug (10) tragendes erstes Maschinenteil (8) Arbeitsbewegungen gegen ein ein zweites Werkzeug (11) tragendes zweites Maschinenteil (9) ausführt und eine Lichtschrankenanordnung (20), die wenigstens eine Lichtschranke, insbesondere eine Laser-Lichtschranke, aufweist und deren Strahlrichtung parallel zur Längsrichtung des ersten Werkzeugs (10) verläuft, zwischen den beiden Werkzeugen (10, 11) an einem derselben so positioniert ist, dass sie einen Sicherheitsabstand zum ersten Werkzeug (10) aufweist, wobei dieser Sicherheitsabstand durch eine verstellbar am ersten Maschinenteil (8) angeordnete Halteeinrichtung (15 bis 18) eingestellt wird, die die wenigstens eine Lichtschrankenanordnung (20) trägt, sowie mit einer bei einer Lichtschranken-Unterbrechung die Arbeitsbewegung stoppenden Blockiereinrichtung und mit einer elektronischen Steuereinrichtung (26) zur Einstellung oder zur Unterstützung der Einstellung des Sicherheitsabstands und mit einer Positionsmesseinrichtung (27) für die Position dehs ersten Maschinenteils (8), wobei eine Eingabe von Werkzeugdaten oder von Werkzeugdaten und Werkstückdaten des zu bearbeitenden Werkstücks (14) mittels einer Eingabeeinrichtung in die elektronische Steuereinrichtung (26) vorgenommen wird und in der elektronischen Steuereinrichtung (26) mit Hilfe von Berechnungsmitteln eine Berechnung einer Abstandsposition des ersten Maschinenteils (8), in der das erste Werkzeug (10) um den Sicherheitsabstand vom zweiten Werkzeug (11) oder vom Werkstück (14) beabstandet ist, aus diesen Daten erfolgt und wobei eine motorische Verschiebung des ersten Maschinenteils (8) in Schließrichtung bis zur Lichtschrankenunterbrechung durch das zweite Werkzeug (11) oder das Werkstück (14) vorgenommen wird und mit Hilfe von Vergleichsmitteln eine Ermittlung einer Abweichung zwischen der erreichten Position und der berechneten Abstandsposition erfolgt und mit Hilfe von Justiermitteln eine Positionskorrektur der Lichtschrankenanordnung (20) um diese Abweichung sowie eine Einstellung der Justierposition erfolgt.

2. Verfahren nach Anspruch 1, **dadurch gekennzeichnet, dass** die Positionskorrektur mit Justiermitteln vorgenommen wird, die als motorische, manuelle oder optische Verstelleinrichtung ausgebildet sind.

3. Verfahren nach einem der vorhergehenden Ansprüche, **dadurch gekennzeichnet, dass** eine Erkennung des Erreichens der Justierposition anhand von Indikatormitteln (25) erfolgt und/oder eine Fixierung der Lichtschrankenanordnung (20) in der erreichten Justierposition mit Hilfe von Brems- und Haltemittel (23) vorgenommen wird.

4. Verfahren Anspruch 3, **dadurch gekennzeichnet, dass** die Erkennung des Erreichens der Justierposition anhand von Indikatormittel (25) vorgenommen wird, die als optische und/oder akustische Indikatormittel ausgebildet sind.

5. Verfahren nach Anspruch 3, **dadurch gekennzeichnet, dass** die Lichtschrankenanordnung (20) in der jeweils erreichten Fixierposition mittels einer Brems- und/oder Klemm- oder Rasteinrichtung gehalten wird.

6. Verfahren nach Anspruch 5, **dadurch gekennzeichnet, dass** die Lichtschrankenanordnung (20) in der jeweils erreichten Fixierposition von einer elektromagnetisch oder elektrisch oder mechanisch oder pneumatisch oder hydraulisch wirkenden Fixiereinrichtung gehalten wird.

7. Verfahren nach einem der vorgehenden Ansprüche, **dadurch gekennzeichnet, dass** eine Erfassung der Relativposition zwischen dem ersten Maschinenteil (8) und der Lichtschrankenanordnung (20) mittels einer Positionsmesseinrichtung (22) erfolgt.

8. Verfahren nach Anspruch 7, **dadurch gekennzeichnet, dass** die Positionsmesseinrichtung zur Erfassung der Relativposition zwischen dem ersten Maschinenteil (8) und der Lichtschrankenanordnung (20) an der Halteeinrichtung (15, 17) angeordnet wird.

9. Verfahren nach einem der vorgehenden Ansprüche, **dadurch gekennzeichnet, dass** die der Justierposition für die elektronische Steuereinrichtung (26) mit Hilfe von Mitteln zur optischen Justierung eingestellt wird.

10. Verfahren nach Anspruch 9, **dadurch gekennzeichnet, dass** die optische Justierung unter Verwendung von Abschaltmitteln vorgenommen wird, die zur Abschaltung von Lichtschrankenbereichen vorgesehen sind, die außerhalb des Sicherheitsbereichs oder -abstands liegen.

11. Verfahren nach Anspruch 10, **dadurch gekennzeichnet, dass** bei der optischen Justierung eine Abschaltung von einzelnen Lichtschranken oder einzelnen Lichtempfängerbereichen der Lichtschrankenanordnung (20) vorgenommen wird.

## Claims

1. Method for the operation of a machine, such as an edging press, cutting machine, stamping machine or the like, wherein a first machine part (8) supporting a first tool (10) performs operating movements against a second machine part (9) supporting a second tool (10), and wherein a photoelectric beam arrangement (20) which comprises at least one photoelectric beam, in particular a laser beam, and the emission direction of which is parallel to the longitudinal direction of the first tool (10), is positioned between the two tools (10, 11) on one of them in such a way that it has a safety distance from the first tool (10), wherein this safety distance is adjusted by means of a holding device (15 to 18) which is adjustably mounted on the first machine part (8) and supports the at least one photoelectric sensor arrangement (20), further comprising a blocking device which stops the operating movement if the photoelectric beam is interrupted, and an electronic control unit (26) for adjusting or for supporting the adjustment of the safety distance, and a position detecting device (27) for the position of the first machine part (8), wherein an input of tool data or of tool data and workpiece data of the workpiece (14) to be machined into the electronic control unit (16) is performed by means of an input device, and wherein in the electronic control unit (16), using calculation means, a distance position of the first machine part (8) is calculated from these data in which the first tool (10) has a safety distance from the second tool (11) or from the workpiece (14), and wherein the first machine part (8) is moved by a motor in the closing direction until the photoelectric beam is interrupted by the second tool (11) or the workpiece (14) and, using comparison means, a deviation between the reached position and the calculated distance position is determined and, using adjustment means, the position of the photoelectric beam arrangement (20) is corrected by the amount of this deviation and its position is adjusted.

2. Method according to claim 1, **characterised in that** the position correction is performed using adjustment means which are designed as a motor-driven, manual or optical adjustment device.

3. Method according to any of the preceding claims, **characterised in that** the arrival at the adjustment position is detected using indicator means (25), and/or **in that** the photoelectric beam arrangement (20) is fixed in the reached adjustment position by means of braking and holding means (23).

4. Method according to claim 3, **characterised in that** the arrival at the adjustment position is detected using indicator means (25) which are designed as visual and/or audible indicator means.

5. Method according to claim 3, **characterised in that** the photoelectric beam arrangement (20) is held in the reached fixing position by means of a braking and/or clamping or latching device.

6. Method according to claim 5, **characterised in that** the photoelectric beam arrangement (20) is held in the reached fixing position by means of an electromagnetic or electric or mechanical or pneumatic or hydraulic locating device.

7. Method according to any of the preceding claims, **characterised in that** the relative position between the first machine part (8) and the photoelectric beam arrangement (20) is detected by means of a position detecting device (22).

8. Method according to claim 7, **characterised in that** the position detecting device for detecting the relative position between the first machine part (8) and the photoelectric beam arrangement (20) is located on the holding device (15, 17).

9. Method according to any of the preceding claims, **characterised in that** the adjustment position for the electronic control unit (26) is adjusted using means for optical adjustment.

10. Method according to claim 9, **characterised in that** the optical adjustment is performed using deactivation means provided for the deactivation of photoelectric beam regions outside the safety range or distance.

11. Method according to claim 10, **characterised in that** in the optical adjustment process individual photoelectric beams or individual light detector regions of the photoelectric beam arrangement (20) are deactivated.

## Revendications

1. Procédé d'exploitation d'une machine telle qu'une presse-plieuse, une découpeuse, une machine à estamper ou analogues, pour lequel une première partie de machine (8) portant un premier outil (10) réalise des mouvements de travail contre une seconde partie de machine (9) portant un second outil (11) et un ensemble de barrières lumineuses (20) qui présente au moins une barrière lumineuse, en particulier une barrière lumineuse laser et dont le sens de rayonnement s'étend parallèlement au sens longitudinal du premier outil (10), est positionné entre les deux outils (10, 11) sur un de ceux-ci de sorte qu'il présente une distance de sécurité par rapport au premier outil (10), que cette distance de sécurité étant réglée par un dispositif de retenue (15 à 18) disposé de manière réglable sur la première partie de machine (8), lequel porte au moins un ensemble de barrières lumineuses (20), ainsi qu'avec un dispositif de blocage arrêtant le mouvement de travail lors d'une interruption de barrière lumineuse et avec un dispositif de commande électronique (26) pour le réglage ou le soutien du réglage de la distance de sécurité et avec un dispositif de mesure de position (27) pour la position de la première partie de machine (8), une entrée de données d'outil ou de données d'outil et de données de la pièce (14) à usiner étant entreprise à l'aide d'un dispositif d'entrée dans le dispositif de commande électronique (26) et un calcul d'une position d'écartement de la première partie de machine (8), dans laquelle le premier outil (10) est espacé de la distance de sécurité du second outil (11) ou de la pièce (14), est effectué à partir de ces données dans le dispositif de commande électronique (26) à l'aide de moyens de calcul et un déplacement motorisé de la première partie de machine (8) dans le sens de fermeture étant entrepris jusqu'à l'interruption de la barrière lumineuse par le second outil (11) ou la pièce (14) et un écart entre la position atteinte et la position d'écartement calculée est déterminé à l'aide de moyens de comparaison et la position de l'ensemble de barrières lumineuses (20) est corrigée à l'aide des moyens d'ajustement de cet écart ainsi que la position d'ajustement est réglée.

2. Procédé selon la revendication 1, **caractérisé en ce que** la position est corrigée avec des moyens d'ajustement qui sont réalisés comme un dispositif de réglage motorisé, manuel ou optique.

3. Procédé selon l'une quelconque des revendications précédentes, **caractérisé en ce que** l'atteinte de la position d'ajustement est détectée à l'aide de moyens indicateurs (25) et/ou l'ensemble de barrières lumineuses (20) est fixée dans la position d'ajustement atteinte à l'aide d'un moyen de freinage et de retenue (23).

4. Procédé selon la revendication 3, **caractérisé en ce que** l'atteinte de la position d'ajustement est détectée à l'aide de moyens indicateurs (25) qui sont réalisés comme des moyens indicateurs optiques et/ou acoustiques.

5. Procédé selon la revendication 3, **caractérisé en ce que** l'ensemble de barrières lumineuses (20) est maintenu dans la position de fixation atteinte respectivement à l'aide d'un dispositif de freinage et/ou de serrage ou d'encliquetage.

6. Procédé selon la revendication 5, **caractérisé en ce que** l'ensemble de barrières lumineuses (20) est maintenu dans la position de fixation atteinte respectivement par un dispositif de fixation agissant par voie électromagnétique ou électrique ou mécanique ou pneumatique ou hydraulique.

7. Procédé selon l'une quelconque des revendications précédentes, **caractérisé en ce que** la position relative entre la première partie de machine (8) et l'ensemble de barrières lumineuses (20) est détectée à l'aide d'un dispositif de mesure de position (22).

8. Procédé selon la revendication 7, **caractérisé en ce que** le dispositif de mesure de la position est disposé pour la détection de la position relative entre la première partie de machine (8) et l'ensemble de barrières lumineuses (20) sur le dispositif de retenue (15, 17).

9. Procédé selon l'une quelconque des revendications précédentes, **caractérisé en ce que** la position d'ajustement pour le dispositif de commande électronique (26) est réglée à l'aide de moyens pour l'ajustement optique.

10. Procédé selon la revendication 9, **caractérisé en ce que** l'ajustement optique est entrepris en utilisant des moyens de déconnexion qui sont prévus pour la déconnexion des zones de barrière lumineuse se trouvant en dehors de la zone ou distance de sécurité.

11. Procédé selon la revendication 10, **caractérisé en ce que** les barrières lumineuses individuelles ou zones de réception de lumière individuelles de l'ensemble de barrières lumineuses (20) sont déconnectées pour l'ajustement optique.
